# EUROPÄISCHE PATENTANMELDUNG

(11) **EP 0 536 865 A1**
(43) Veröffentlichungstag der Anmeldung: **14.04.1993**
(21) Anmeldenummer: 92250292.7
(22) Anmeldetag: 09.10.1992
(51) Int. Cl.: B60R 9/10

(54) **Radträger mit Felgenbefestigung**

(71) Anmelder: LIEBRICHT, Eckhard, D-12159 Berlin (DE)
(72) Erfinder: LIEBRICHT, Eckhard, D-12159 Berlin (DE)

(57) **Zusammenfassung**

Befestigungsband (1) zur Befestigung von Radfelgen an Radträgern. Es besteht aus Klettband, wobei Haken- und Flauschband Rücken-an-Rücken miteinander verschweißt sind. Das Befestigungaband ist am Radträger befestigbar. Die Radfelge wird durch Umlegen des Befestigungsbandes um Radfelge und Radträger und dem Aneinanderdrücken des Befestigungsbandes befestigt.

## Beschreibung

### Problem

Die Räder von Fahrrädern werden beim Aufrechttransport aur Fahrraddachträgern, aus Sicherheitsgründen am Radträger befestigt. Dies geschieht mittels Riemen, die um die Felgen der Räder und Radträger gebunden und mit Schnallen geschlossen werden. Ebenso gibt es für die Felgenbefestigung fest am Radträger installierte Felgenbefestigungen, die einfacher zuhandhaben sind, aber auch viel teurer als Befestigungsriemen. Mit dieser Erfindung soll eine Lösung aufgezeigt werden, die den Vorteil der einfachen Handhabung mit der Preisgünstigkeit der Riemen verbindet.

### Vorschlag

Als Felgenbefestigung wird hier ein Klettband vorgeschlagen, bei dem Haft- und Hakenband Rücken-an- Rücken verschweißt sind. Beim Verschließen wird dabei ein Ende über das andere gelegt und zusammengedrückt. Klettband hat den Vorteil, daß es äußerst schnell und einfach zu Schließen und zu Öffnen ist. Die Felgenbefestigung (1) besteht in ganzer Länge aus einem Rücken-an-Rücken verschweißten Klettband ist. Das hat den Vorteil, daß die Felgenbefestigung (1) einfach herstellbar ist und zudem in großer Länge varierbar ist, sodaß es für Mountain Bike-Felgen genauso verwendbar ist, wie für Sportfelgen. Das Klettband wird mittels Befestigungselementen, die an der Felgenbefestigung (1) befestigt sind, am Radträger (3) befestigt.

Für die Befestigung (2) der Felgenbefestigung (1) am Radträger (3) werden hier mehrere Vorschläge gemacht: 1. Befestigung mittels Magneten; diese Befestigung kann nur bei Stahlradträgern eingesetzt werden. 2. Befestigung mittels Haken, die an den Flanschen (4) des Radträgers (3) eingehakt werden können und 3. Befestigung mittels Zylinder, wobei die Flanschen (4) des Radträgers (3) kreisförmig und mit Schlitz nach unten ausgebildet sind und der Zylinder in diesen hineingesteckt und verschiebar ist.

Vorgeschlagen wird hier 1. die Befestigung der Felgenbefestigung (1) am Radträder (3) mittels eines am der Felgenbefestigung angebrachten Befestigungselementes (2), daß an einem Radträgerflansch (4) befestigt wird und 2. der Befestigung mittels zweier an der Felgenbefestigung angebrachten Befestigungselemente (2), die jeweils an einem der beiden Flanschen des Radträgers besfestigt werden.

Bei der Hakenbefestigung werden Haken verwendet, die einen Schlitz mit Widerhaken haben, durch den das Klettband hindurchgezogen und befestigt werden kann. Dadurch ist es möglich, daß bei beidseitiger Befestigung der Felgenbefestigung (2) am Radträger (3) die Felgenbefestigung (1) festverzurrbar ist, da beide Widerhakenschlitze gegeneinander wirken und die Felgenbefestigung (1) dadurch nicht ohne weiteres vom Radträger (3) abnehmbar ist.

Bei einseitiger Befestigung der Felgenbefestigung (1) am Radträger (3) ist es möglich, daß die Felgenbefestigung (1) über die Lastenträger (5) hinweg und damit über die gesamte Länge des Radträgers (3) verschiebar ist, mit dem Vorteil, daß die Felgenbefestigung (1) auch für die Befestigung des Fahrradhalterbügels bei Leerfahrten verwendbar ist.

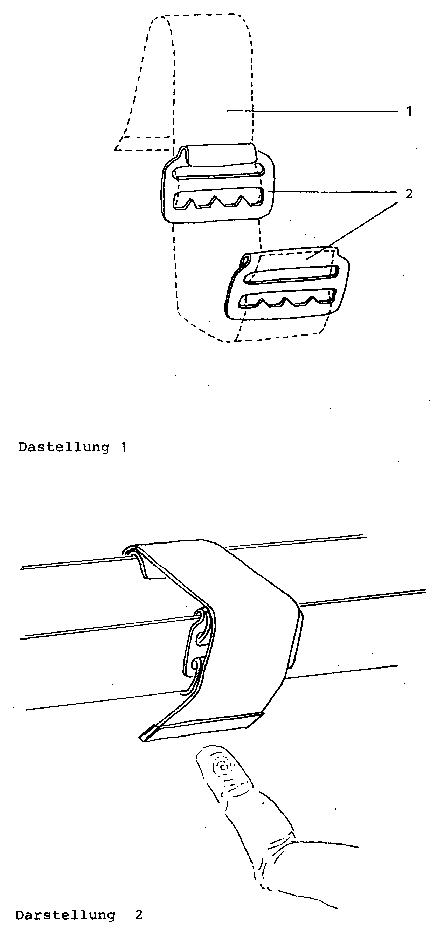

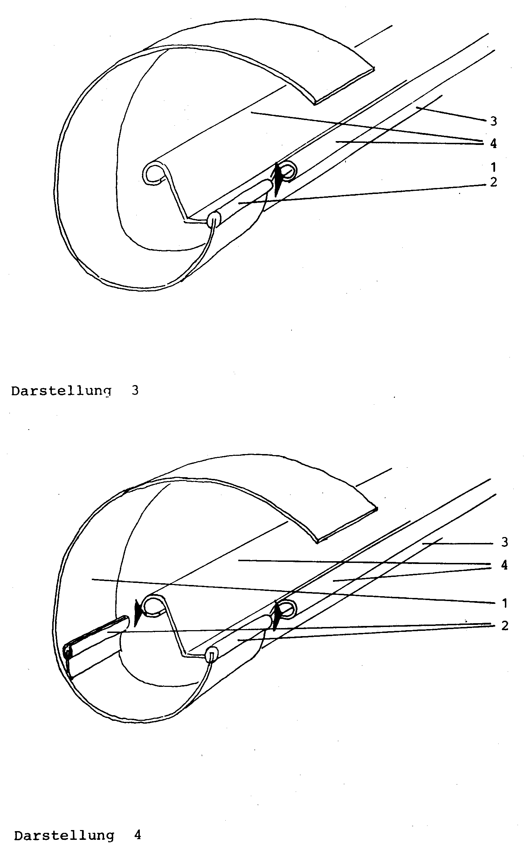

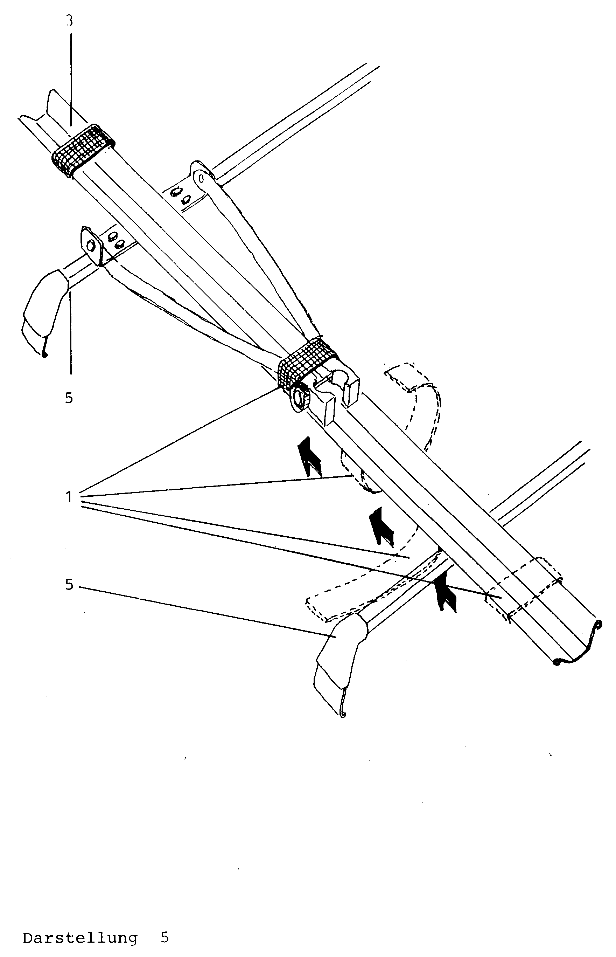

## Patentansprüche

1. Radträger (3) mit Felgenbefestigung (1), die am Radträger (3) mittels Befestigungselementen (2) an der Felgenbefestigung (1) befestigbar sind, dadurch gekennzeichnet, daß die Felgenbefestigung (1)
a) mittels Klettband verschließbar ist,
b) aus Klettband besteht, deren Haken- und Flauschband Rücken-an-Rücken verschweißt ist,
c) mit Befestigungselementen (2) versehen ist, mit denen die Felgenbefestigung am Radträger (3) befestigbar ist.

2. Radträger (3) mit Felgenbefestigung (1) nach Anspruch 1, dadurch gekennzeichnet, daß die Befestigungselemente (2) Magneten sind, die an Radträgern (3) aus Stahl anhaften.,

3. Radträger (3) mit Felgenbefestigung (1) nach Anspruch 1, dadurch gekennzeichnet, daß die Befestigungselemente (2)
b) Haken sind, die an den Radträgerflanschen (4) einhakbar sind,
c) Haken sind, die mit Schlitzen versehen sind, durch die das Klettband hindurchziehbar ist, die Schlitze Widerhaken haben, damit das Klettband am Haken befestigbar ist und das Klettband mit zwei Haken, an beiden Radträgerflanschen (4) eingehakt, am Radträger fest verzurrbar ist,

4. Radträger (3) mit Felgenbefestigung (1) nach Anspruch 1, dadurch gekennzeichnet, daß die Befestigungselemente (2)
Zylinder sind, die in die kreisförmig, über die gesamte Radträgerlänge, geformten und nach unten mit Schlitz versehenen Radträgerflanschen (4) einschiebbar und in diesen verschiebbar sind sowie nach unten durch den Schlitz nicht herausziehbar sind.

5. Radträger (3) mit Felgenbefestigung (1) nach den Ansprüchen 1 bis 4, dadurch gekennzeichnet, daß die Felgenbefestigung (1)
a) mit einem Befestigungselement (2) an einem Radträgerflansch (4) befestigbar ist, da dadurch die Felgenbefestigung (1) über den ganzen Radträger (3), über die Lastenträger (5) hinweg, verschoben werden kann und die Felgenbefestigung (1) damit auch als Befestigung für den Fahrradhalterbügel bei Leerfahrt verwendbar ist,
b) mit zwei Befestigungselementen (2) , jeweils an einem der beiden Flanschen (4)der Radträger (3), am Radträger befestigbar ist.
